# EUROPEAN PATENT SPECIFICATION

(11) **EP 1 245 090 B1**
(45) Date of publication and mention of the grant of the patent: **29.03.2006**
(21) Application number: 00901056.2
(22) Date of filing: 04.01.2000
(51) Int. Cl.: H04J 3/04, H04J 3/16

(54) **TELECOMMUNICATION NETWORK ELEMENT WITH MEANS FOR SHARING RESOURCES ON A SINGLE DIE**
TELEKOMMUNIKATIONSNETZWERKTEIL MIT MITTELN ZUR VERTEILUNG VON RESSOURCEN AUF EINEM EINZIGEN SCHEIBCHEN
ELEMENT DE RESEAU DE TELECOMMUNICATION COMPRENANT DE MOYENS DE PARTAGE DE RESSOURCES SUR UNE PLAQUETTE UNIQUE

(43) Date of publication of application: 02.10.2002
(73) Proprietor: Nokia Corporation, 02150 Espoo (FI)
(72) Inventor: KÄUFER, Uwe, D-45239 Essen (DE)
(74) Representative: Schippan, Ralph
(86) International application number: PCT/EP2000/000016
(87) International publication number: WO 2001/050654

(56) References cited:
- EP-A- 0 814 580
- GB-A- 2 280 337
- ASAHI K ET AL: "STM-64 MULTIPLEXER AND REGENERATOR FOR 10GBIT/S FIBER OPTIC TRANSMISSION" IEEE INTERNATIONAL CONFERENCE ON COMMUNICATIONS (ICC),US,NEW YORK, IEEE, 23 June 1996 (1996-06-23), pages 165-169, XP000625661 ISBN: 0-7803-3251-2

## Description

This invention relates to a telecommunication network element with means for sharing resources on a single die by a plurality of communication channels, comprising at least one multiplexing unit, and at least one combinational unit, and at least one storing unit, and at least one control unit.

In current telecommunication network elements, the communication channels are processed by a number of low order functions. These functions are realised in functional units in embedded chips on semiconductor dies. For each communication channel, one functional unit is placed on the die. Each functional unit comprises storage units and combinational units. In particular, the storage units can be random access memory (RAM) elements and the combinational units represent Boolean equations. The storage units and the combinational units comprise a huge amount of gates to realise their function.
When, for instance mapping a plesiochronous digital hierarchy (PDH) signal with a plurality of 2,048 MHz clock frequency communication channels into a synchronous digital hierarchy (SDH) with 155 MHz clock frequency, as many combinational units as communication channels are being mapped, have to be placed on the die.

A problem resulting hereform is, that the design complexity grows with every additional communication channel. As there are storage as well as combinational units in a functional unit, these units are mixed up on the die, and the design gets more and more complicated. Thus the die size can not be used efficiently.

Another problem is that the functional unit design can not be reused, because the design for each functional unit changes with every additional communication channel.

An additional problem is, that the number of gates used on the die grows at least by the number of gates used for every single functional unit with each additional communication channel.

Therefore, it is the object of the present invention to improve the efficiency of the chip design in a telecommunication network element of the kind specified above.

The invention solves these problems by providing a telecommunication network element having the features of claim 1 and a method having the features of claim 16.

Such a telecommunication network element allows an efficient chip design. Only one combinational unit is used by all communication channels in time multiplex. The result of the combinational unit is stored in the storing unit, for each channel individually, for instance as a state vector. By separating the combinational unit from the storing unit, the die size can be used more efficiently. The combinational unit can be reused for different processes, because the functionality is separated from the storing unit. The interworking between the storing unit and the combinational unit has to be monitored and controlled by a control unit. This control unit decides which communication channel will be served by the combinational unit next, which state vector is stored in the storing unit and which state vector is passed to the next combinational unit or to the output of the network element.

The number of gates used on the die is increased by the control unit. But the overall number of gates used for realisation of a certain functionality is less than the number of gates used by a conventional solution. This is because the combinational unit can be used by all channels separately. Thus the combinational unit is only realised once. The number of communication channels has no effect on the number of gates used for the combinational unit. Only the RAM size has to be adapted to the number of communication channels, because for each communication channel an address range in the storing unit is reserved.

The telecommunication network element can further comprise means for mapping the signals from one communication network to another communication network, where the communication networks have different clock frequencies. Thus it is possible to have a common design for the combinational unit without taking care of the number of communication channel being processed. Only the size of the storing unit has to be adapted to the number of channels.

The telecommunication network element can further be implemented in a way that said combinational unit comprises a serial to parallel converter, a mapping buffer write controller, a mapping buffer, a mapping buffer read controller, a phase detector, and a byte multiplexer, and that at least one byte buffer is associated to the serial to parallel converter, and that at least one storage element is associated to the mapping buffer write controller, and that the mapping buffer comprises storage elements for each channel individually, and that at least one storage element is associated to the mapping buffer read controller, and that at least one storage element is associated to the phase detector, and that at least one storage element is associated to one said byte multiplexer.

The serial to parallel (S/P) converter fill level, which is the number of bits stored in the at least one byte buffer, depends on the frequency jitter of the first communication network. By using the at least one byte buffer, it is possible to monitor the number of bits currently stored in the S/P converter.

The write controller calculates the physical storage address for writing channel data in the mapping buffer by using the associated storage element that stores the address of the previously stored channel.

By using the mapping buffer it is possible to compensate a frequency offset between the first and the second communication network.

The read controller calculates the physical read address for reading channel data in the mapping buffer by using the associated storage element that stores the address of the previously stored channel and the fill level of said at least one storage element associated to said byte multiplexer.

The phase detector calculates the overall buffer fill level. Thus it is possible to justify frequency jitter in a bit resolution.

By using the multiplexer, it is possible to multiplex the communication channels of the first communication network into a second communication network with, for example, another bit order or another clock frequency.

The write controller of the telecommunication network element can further comprise means for generating a write address for storing data in said mapping buffer. Thus the storage address is calculated in the write controller and the buffer fill level can be monitored in the write controller. By calculating the write address in the write controller, storage conflicts can be avoided.

The write controller of the telecommunication network element can further comprise means for initiating a mapping buffer initialisation. Thus the mapping buffer can be initialised for different operation modes and in case of a failure.

The write controller of the telecommunication network element can further comprise means for setting an alarm signal. Thus it is possible to set an alarm signal in the output signal.

The write controller of the telecommunication network element can further comprise means for setting a buffer overflow or underflow interrupt. Thus it is possible to react to an over- or underflow of the mapping buffer.

The write controller of the telecommunication network element can further comprise means for setting status bits in the S/P converter. Thus the write controller can set status bits in the S/P converter. As an example, the S/P converter might comprise a status bit, that tells whether the content of one of the byte buffers has already been written to the mapping buffer or not. This status bit could be set by the write controller.

A telecommunication network element for synchronous mapping of a signal that is characterised in that the storage element of the mapping buffer consists of a plurality of bits, where at least one bit is used for a time slot marker and a plurality of bits are used for channel data is a further implementation of the invention.

By adding a time slot marker to the data stored in the mapping buffer, it is possible to recognise the beginning of a signal frame. Thus the mapping can be done in a way, that each frame of the first communication network is mapped into a corresponding frame of the second communication network.

The phase detector of the telecommunication network element can further comprise means for receiving the fill level of the at least one byte buffer from the S/P converter, means for receiving the write position, and means for receiving the read position, and means for receiving the fill level of said storage element of said byte multiplexer. Because the bit timing information in a resource shared architecture gets lost and only byte timing information is available, it is necessary to recover the bit timing information to enable timing justifications on a per bit basis. By enabling the phase detector to read the fill level of all storage elements, it is possible for the phase detector to calculate the overall fill level of the functional unit. The justification events shall be spread over time regularly. Therefore the phase detector calculates a pseudo average fill level, which means, that the average of the fill level does not react to short time frequency jitters and smoothens the justification and mapping jitter in the second telecommunication network.

The write controller of the telecommunication network element can further comprise means for synchronisation between the functional unit and a pointer generator which is associated to a tributary unit. Thus the justification events can be generated by a pointer generator and controlled by the write controller.

The read controller of the telecommunication network element can further comprise means for providing a frame alignment signal. By providing a frame alignment signal a pointer generator can be synchronised with the input signal.

The multiplexer of the telecommunication network element can further comprise at least one byte buffer, and the phase detector can comprise means for receiving the fill level of the at least one byte buffer from the serial to parallel converter, and means for receiving the write position, and means for receiving the read position, and means for receiving the fill level of the at least one byte buffer from the multiplexer. Thus an asynchronous mapping of communication network signals is possible.

The invention can be implemented such that the first communication network is a plesiochronous digital hierarchy (PDH) network and the second network is a synchronous digital hierarchy (SDH).
Thus it is possible to map a plurality of communication channels of a PDH network into a plurality of communication channels of a SDH network.

The invention can be implemented such that the the first communication network is a synchronous digital hierarchy (SDH) network and the second network is a plesiochronous digital hierarchy (PDH).
Thus it is possible to map a plurality of communication channels of a SDH network into a plurality of communication channels of a PDH network.

A method for sharing resources on a single die in a telecommunication network element by using at least one combinational unit, at least one storing unit, at least one control unit, and at least one multiplexing unit, with said combinational unit, said storing unit, said control unit, and said multiplexing unit are logically separated from each other on said die, and where said plurality of communication channels are processed by said combinational unit in time multiplex, where said combinational unit represents one same Boolean equation for each channel separately, and where the result of the combinational unit is stored by said storing unit for each channel individually, and where the stored data is multiplexed by said multiplexing unit into one multiplexed output signal, and where said control unit controls the interworking between said multiplexing unit, said combinational unit, and said storing unit, is also disclosed. Such a method makes the design process for telecommunication network elements much easier, because a combinational unit can be reused in other designs when it has been designed once.

The invention and the various features thereof may be fully understood from the following description, when read together with the accompanying drawings in which:
- Fig. 1: is a block diagram showing the prior art approach;
- Fig. 2: is a block diagram showing the approach according to an embodiment of the invention;
- Fig. 3: is a more detailed block diagram showing the mapping of communication channels;
- Fig. 4: is a block diagram showing the sources for fill level averaging; and
- Fig. 5: is a diagram showing the justification thresholds.

The following description in addition with the figures is one possible implementation of the invention and shall not restrict the invention to its content.

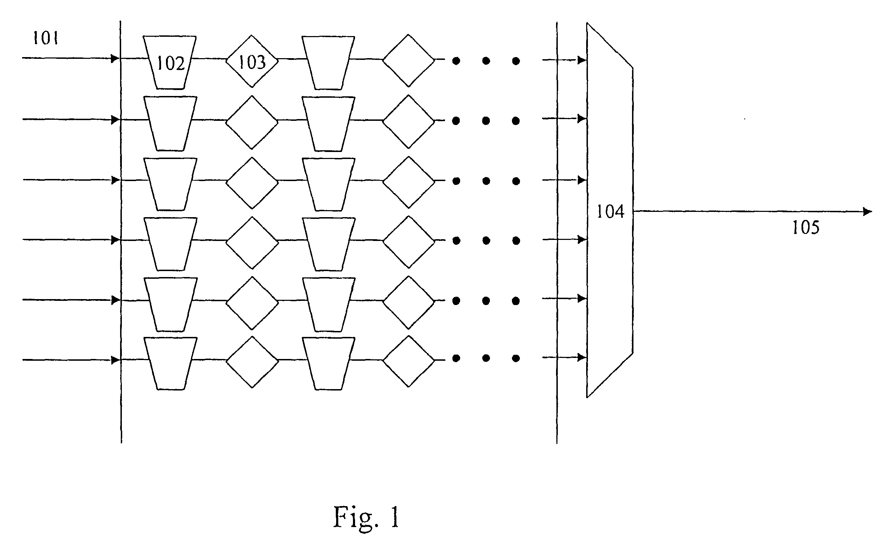

Fig. 1 shows a telecommunication network element with a plurality of communication channels 101 at its input. Each channel is processed by a combinational unit 102 and the result of the combinational unit is stored in a storing unit 103 . Usually, a communication channel is processed by more than one combinational units, that are placed behind the storing unit of the previous processing step. After being processed by the combinational units , the communication channels are being multiplexed by a multiplexer 104 into one output signal 105. It is obvious, that for each communication channel a processing line consisting of combinational units 102 as well as storing units 103 has to be provided on the same die. Thus the number of gates used for realising such a telecommunication network element grows with every additional communication channel.

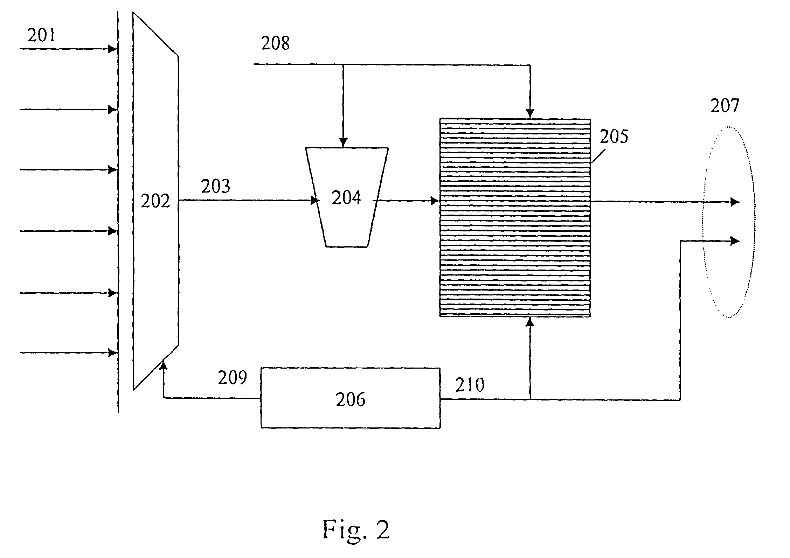

Fig. 2 shows a telecommunication network element according to the invention. A plurality of communication channels from one telecommunication network 201 is multiplexed by a multiplexing unit 202 into one time division signal 203. The data of the incoming communication channels 201 is bit serial. At first, the bit serial data is converted into byte parallel data in the multiplexing unit 202. After that, the multiplexing unit multiplexes the byte parallel data into one time division signal 203. The combinational unit 204 processes the multiplexed signal 203 in time multiplex. The result of the combinational unit is stored in the storing unit 205 as a state vector for each channel individually. The storing unit and the combinational unit receive a frequency clock signal 208 for synchronisation, respectively. The control unit 206 controls the multiplexing unit 202 by using a control signal 209, the output of the storing unit 205, as well as the storing of state vectors in the storing unit is controlled by a control signal 210 of the control unit 206. The output 207 of such a functional unit is passed to a following functional unit or to the output of the telecommunication network element. It is obvious, that only one combinational unit is used in time multiplex for the plurality of communication channels. The storing unit 205 has to be adapted to the number of communication channels, because each communication channel needs an address range in the storing unit, so that the output of the combinational unit 204 can be stored in the storing unit before it is processed by a next combinational unit, or linked to the output of the telecommunication network element.

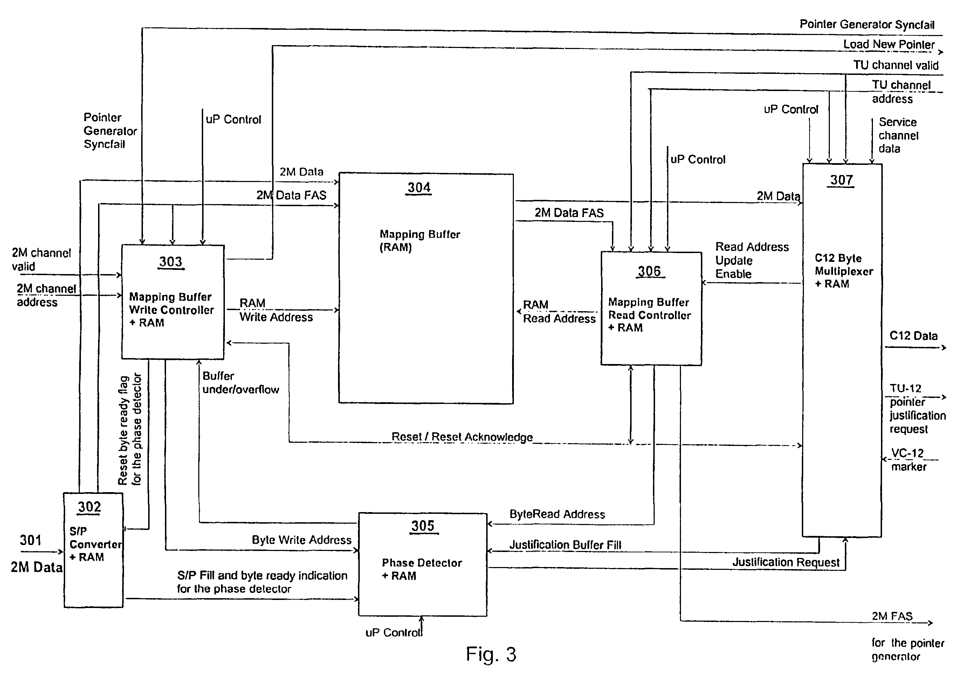

Fig. 3 shows a telecommunication network element for asynchronous mapping of a plurality of communication channels of a plesiochronous digital hierarchy network into an output signal of a synchronous digital hierarchy network.

The serial to parallel (S/P) converter 302 comprises at least one byte buffer as well as a serial to parallel converter logic. It comprises means for receiving a 2M data stream 301, and a reset byte ready signal. The byte buffer fill level and data bits are send to the phase detector 305 and the S/P converter output data stream is send to the mapping buffer 304. The incoming 2M serial data stream is mapped consecutively into a first byte buffer and after the first byte buffer has been filled the data is written into a second byte buffer. After one byte buffer has been filled, the data is written to the output stream as a bit parallel 2M data stream. After the content of the byte buffer has been written to the data stream, this byte buffer can be filled again with new incoming data. After the data is written onto the parallel 2M data stream, a monitoring bit is set. This bit indicates that the data have been written on the data stream, but not yet into the mapping buffer. After the data have been written into the mapping buffer 304, this status bit is reset. The overall fill level of the byte buffers is monitored in the S/P converter and indicated to the phase detector 305.

The mapping buffer 304 comprises physical storage elements for storing channel data being received from the S/P converter 302, it also comprises means for receiving a 2M data stream, 2M data frame alignment signals, and write as well as read addresses. The mapping buffer 304 further comprises means for sending a 2M data frame alignment signal and a 2M data stream.

The incoming 2M data stream is written into the storage elements according to the write address, which is set by the mapping buffer write controller 303. The output data is written from the storage element, which is set by the mapping buffer read controller 306.

The mapping buffer write controller 303 comprises means for receiving a 2M channel valid signal, a 2M channel address signal, a pointer generator synchronisation signal from a tributary unit (not shown), a 2M data frame alignment signal, a control signal, a reset acknowledge signal, and a buffer under/overflow signal. It also comprises means for sending a load new pointer signal to the tributary unit, a write address signal to the mapping buffer 304, a byte write address signal to the phase detector 305, and a reset byte ready flag signal to the S/P converter 302. The mapping buffer write controller 303 controls the writing of the 2M data stream into the mapping buffer 304 by setting the physical storage element address for each channel individually. The write address is send to the phase detector 305 and after the data is written into the mapping buffer 304, the byte ready flag in the S/P converter 302 is reset. The mapping buffer write controller 303 also serves as a master for initiating a mapping buffer initialisation, and for setting an alarm signal in the output data stream, and for setting a buffer under or overflow interrupt.

The phase detector 305 incorporates the following functions:
1. Calculation of the overall buffer fill;
2. Monitoring the mapping buffer for buffer under/overflow;
3. Averaging the overall buffer fill;
4. Generating Justification Control signals by threshold comparisons;
5. Passing control information from write to read side of the mapping buffer.

The phase detector 305 comprises means for receiving the byte write address, the S/P fill level and the status of the byte ready flag, the byte read address, a justification buffer fill signal, and a control signal. It also comprises means for sending a buffer under/overflow signal, and a justification request signal.

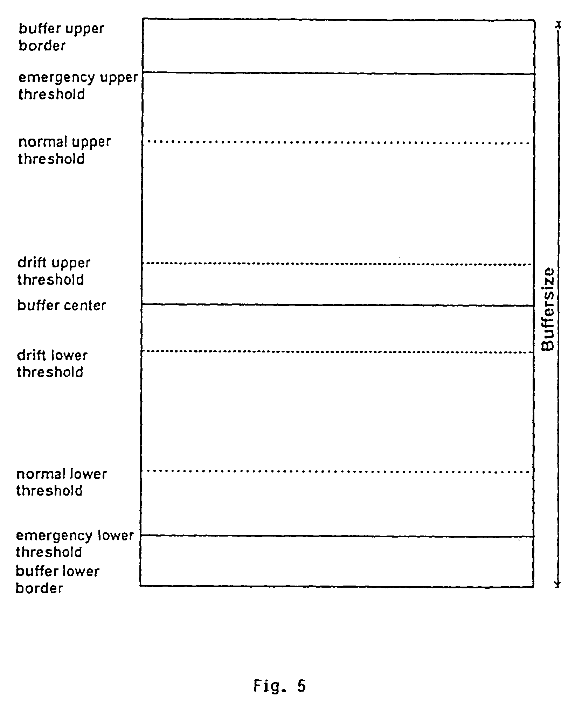

By receiving the byte read address, the byte write address, the S/P fill level, and the justification buffer fill level, the phase detector is able to calculate an overall buffer fill level. With the buffer fill level and the result of the previous fill level calculation, the phase detector 305 is able to calculate an overall buffer fill average. As will be described with Fig. 5, the average is compared to thresholds, and thus the phase detector 305 decides whether justifications have to be taken or not. By comparing the byte read with the byte write address, the phase detector 305 is able to detect a buffer under/overflow and in such a case an interrupt signal is send.

The mapping buffer read controller 306 comprises means for receiving a 2M data frame alignment signal, a tributary unit channel valid signal, a tributary unit channel address signal, a control signal, a read address update enable signal, and a reset acknowledge signal. It also comprises means for sending a read address signal, a byte read address signal, and a 2M frame alignment signal. In the mapping buffer read controller 306, the read address is calculated, from which the data is read. This address is also passed to the phase detector 305 for the overall buffer fill calculation. By receiving the tributary unit signals, the mapping buffer read controller 305 is enabled to update the byte read address with every valid tributary unit cycle. The read address will be stored in the associated storing unit, so that it is available for the next read address calculation.

The C 12 byte multiplexer 307 comprises means for receiving the 2M data signal, a control signal, a tributary unit channel valid signal as well as a channel address signal, a service channel data signal, a VC-12 marker signal, a justification request signal, and a reset acknowledge signal. It also comprises means for sending a justification buffer fill signal, a read address update enable signal, a C-12 data signal, and a tributary unit C-12 pointer justification request signal. The C-12 byte multiplexer comprises the following functions:
1. C-12 byte multiplexing, building up a C 12 container;
2. Bit-base justification + justification counter;
3. Justification buffer controller;
4. 2M alarm signal insertion;
5. Passing pointer justification request to pointer generator;
6. Adding service channel or µP bytes to the output stream.
   The received data from the mapping buffer 304 is multiplexed into a C 12 data container. As there are timing differences between the PDH network and the SDH network, justifications have to be performed. During a justification event, bits are stuffed into the output signal, where these bits have no relation to the input signal. By adding the justification bits into the output signal, a mapping jitter occurs in the output signal. To achieve a low mapping jitter, it is necessary to spread the justification events regularly over time. This is possible by using the phase detector, which is able to calculate the overall buffer fill level on a bit basis. Thus it is possible to insert single stuffing bits, by which a low mapping jitter is archived.

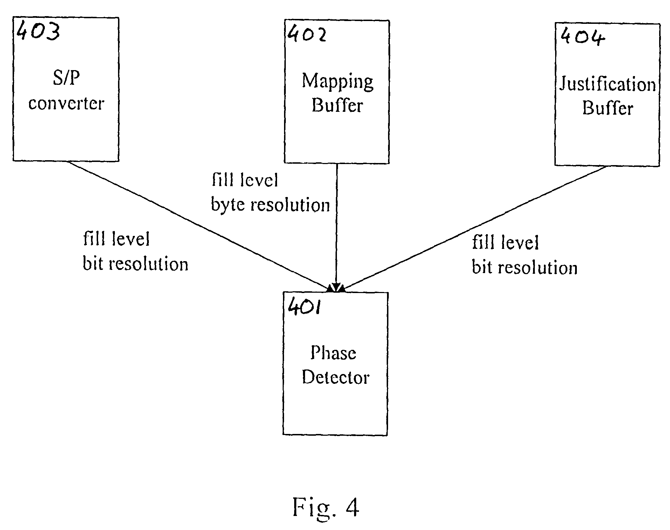

Fig. 4 shows a phase detector 401, that receives fill level signals from the S/P converter 403, the mapping buffer 402, and the justification buffer 404. The fill level of the mapping buffer 402 can only be measured in byte resolution. To enable the byte multiplexer to perform bit based justifications, the overall buffer fill level calculation in the phase detector 401 has to be performed on a bit basis. Thus the fill level of the S/P converter 403 is measured in bit resolution as well as the fill level of the justification buffer 404. With this information, the phase detector 401 is able to calculate the fill level in bit resolution.

To spread the justification events regularly over time, the overall buffer fill level is compared in the phase detector 401 with justification thresholds, as shown in Fig. 5. The buffer centre represents the average buffer fill size. The normal upper and lower thresholds represent the points, were justification events have to be initiated. In case of the upper threshold, a negative justification request is initiated, which results that one payload bit more per VC-12 multiframe must be inserted in asynchronous mapping mode or one byte more per every 4th TU-12 multiframe must be inserted in synchronous mapping mode.

In case of the lower threshold, a positive justification request is send. In such a case one payload bit less per VC-12 multiframe must be inserted in asynchronous mode or on byte less per every 4th TU-12 multiframe must be inserted in byte synchronous mode.

In case the buffer size reaches the emergency thresholds, justification events are initiated immediately.

By comparing the average buffer fill level with the actual buffer fill level, it is possible to detect a drift between these two values. The drift thresholds are used to check that there is now contradirectional drift between these two values.

## Claims

1. Telecommunication network element with means for sharing resources on a single die by a plurality of communication channels (201), these means comprise at least one multiplexing unit (202), and at least one combinational unit (204), and at least one storing unit (205), and at least one control unit (206),
**characterised in that**
said multiplexing unit (202), said combinational unit (204), said storing unit (205), and said control unit (206) are logically separated from each other on said die, and
that said plurality of communication channels (201) are multiplexed by said multiplexing unit (202) into one multiplexed output signal (203), and
that said multiplexed output signal (203) is processed by said combinational unit (204) in time multiplex, where said combinational unit (204) represents one same Boolean equation for each channel separately, and
that the result of the combinational unit is stored by said storing unit (205) for each channel individually, and
that said control unit (206) controls the interworking between said multiplexing unit (202), said combinational unit (204), and said storing unit (205) .

2. Telecommunication network element according to claim 1,
**characterised in that**
said network element provides means for mapping of signals from a plurality of communication channels (201) from one first communication network to one second communication network.

3. Telecommunication network element according to claim 1 or 2,
**characterised in that**
the combinational unit (204) comprises
a serial to parallel converter (302), and
a mapping buffer write controller (303), and
a mapping buffer (304), and
a mapping buffer read controller (306), and
a phase detector (305), and
a byte multiplexer (307), and
that at least one byte buffer is associated to said serial to parallel converter (302), and
that at least one storage element is associated to said mapping buffer write controller (303), and
that the mapping buffer (304) comprises storage elements for each channel individually, and
that at least one storage element is associated to said mapping buffer read controller (306), and
that at least one storage element is associated to said phase detector (305), and
that at least one storage element is associated to said byte multiplexer(307).

4. Telecommunication network element according to claim 3,
**characterised in that**
the write controller (303) comprises means for generating a write address for storing data in said mapping buffer (304).

5. Telecommunication network element according to claim 3,
**characterised in that**
the write controller (303) comprises means for initiating a mapping buffer initialisation.

6. Telecommunication network element according to claim 3,
**characterised in that**
the write controller (303) comprises means for setting an alarm signal.

7. Telecommunication network element according to claim 3,
**characterised in that**
the write controller (303) comprises means for setting a buffer overflow or underflow interrupt.

8. Telecommunication network element according to claim 3,
**characterised in that**
the write controller (303) comprises means for setting status bits in said serial to parallel converter.

9. Telecommunication network element according to claim 3 for synchronous mapping of a signal,
**characterised in that**
said storage element of said mapping buffer (304) consists of a plurality of bits, where at least one bit is used for a time slot marker and a plurality of bits are used for channel data.

10. Telecommunication network element according to claim 3,
**characterised in that**
said phase detector (305) comprises means for receiving the fill level of the at least one byte buffer from said serial to parallel converter (302), and means for receiving the write position of said mapping buffer (304), and
means for receiving the read position of said mapping buffer (304), and
means for receiving the fill level of said storage element of said byte multiplexer (307).

11. Telecommunication network element according to claim 3 or 9,
**characterised in that**
said write controller (303) comprises means for synchronisation between a functional unit and a pointer generator.

12. Telecommunication network element according to claim 3,
**characterised in that**
said read controller (306) comprises means for providing a frame alignment signal, and
means for generating a read address for reading data in said mapping buffer (304).

13. Telecommunication network element according to claim 3 for asynchronous mapping of a signal,
**characterised in that**
said multiplexer comprises at least one byte buffer, and
that said phase detector comprises means for receiving the fill level of said at least one byte buffer from said serial to parallel converter, and
means for receiving the write position, and
means for receiving the read position, and
means for receiving the fill level of said at least one byte buffer from said multiplexer.

14. Telecommunication network element according to claim 2,
**characterised in that**
the first communication channel of the plurality of communication channels is a plesiochronous digital hierarchy (PDH) channel and the second channel is a synchronous digital hierarchy (SDH) channel.

15. Telecommunication network element according to claim 2,
**characterised in that**
the first communication channel of the plurality of communication channels is a synchronous digital hierarchy (SDH) channel and the second channel is a plesiochronous digital hierarchy (PDH) channel.

16. Method for sharing resources on a single die in a telecommunication network element by using
at least one combinational unit, and
at least one storing unit, and
at least one control unit, and
at least one multiplexing unit,
**characterised in that**
said combinational unit, said storing unit, said control unit, and said multiplexing unit, are logically separated from each other on said die, and that said plurality of communication channels are processed by said combinational unit in time multiplex, where said combinational unit represents one same Boolean equation for each channel separately, and
that the result of the combinational unit is stored by said storing unit for each channel individually, and that the stored data is multiplexed by said multiplexing unit into one multiplexed output signal, and that said control unit controls the interworking between said combinational unit, said storing unit, and said multiplexing unit.

17. Method of claim 16,
**characterised by**
mapping of signals from a plurality of communication channels (201) from one first communication network to one second communication network within said network element.

18. Method of claim 16,
**characterised by**
associating at least one byte buffer to a serial to parallel converter, and associating at least one storage element to a mapping buffer write controller, storing within storage elements of the mapping buffer channel data for each channel individually, associating at least one storage element to a mapping buffer read controller, and associating at least one storage element to a phase detector, and associating at least one storage element to a byte multiplexer.

19. Method of claim 18,
**characterised by**
receiving within said phase detector a fill level of the at least one byte buffer from said serial to parallel converter, receiving within said phase detector the write position of said mapping buffer, receiving the read position of said mapping buffer, and receiving within said phase detector the fill level of said storage element of said byte multiplexer.

## Patentansprüche

1. Telekommunikationsnetzelement mit Mitteln zum gemeinsamen Nutzen von Ressourcen auf einem einzelnen Chip durch eine Mehrzahl von Kommunikationskanälen (201), wobei diese Mittel wenigstens eine Multiplexeinheit (202) und wenigstens eine Kombinationseinheit (204) und wenigstens eine Speichereinheit (205) und wenigstens eine Steuereinheit (206) umfassen, **dadurch gekennzeichnet,**
**dass** die genannte Multiplexeinheit (202), die genannte Kombinationseinheit (204), die genannte Speichereinheit (205) und die genannte Steuereinheit (206) auf dem genannten Chip logisch voneinander getrennt sind, und
**dass** die genannte Mehrzahl von Kommunikationskanälen (201) von der genannten Multiplexeinheit (202) zu einem multiplexierten Ausgangssignal (203) multiplexiert werden und
**dass** das genannte multiplexierte Ausgangssignal (203) von der genannten Kombinationseinheit (204) im Zeitmultiplexverfahren verarbeitet wird, wobei die genannte Kombinationseinheit (204) für jeden Kanal separat eine gleiche Bool'sche Gleichung repräsentiert, und
**dass** das Ergebnis der Kombinationseinheit von der genannten Speichereinheit (205) für jeden Kanal einzeln gespeichert wird, und
**dass** die genannte Steuereinheit (206) das Zusammenarbeiten zwischen der genannten Multiplexeinheit (202), der genannten Kombinationseinheit (204) und der genannten Speichereinheit (205) steuert.

2. Telekommunikationsnetzelement nach Anspruch 1,
**dadurch gekennzeichnet, dass**
das genannte Netzelement Mittel zum Mappen von Signalen von einer Mehrzahl von Kommunikationskanälen (201) von einem ersten Kommunikationsnetz auf ein zweites Kommunikationsnetz bereitstellt.

3. Telekommunikationsnetzelement nach Anspruch 1 oder 2, **dadurch gekennzeichnet, dass**
die Kombinationseinheit (204) einen Seriell-Parallel-Wandler (302) und einen Mapping-Pufferspeicher-Schreibcontroller (303) und einen Mapping-Pufferspeicher (304) und einen Mapping-Pufferspeicher-Lesecontroller (306) und einen Phasendetektor (305) und einen Byte-Multiplexer (307) umfasst und dass wenigstens ein Byte-Pufferspeicher mit dem genannten Seriell-Parallel-Wandler (302) assoziiert ist, und
dass wenigstens ein Speicherelement mit dem genannten Mapping-Pufferspeicher-Schreibcontroller (303) assoziiert ist und
dass der Mapping-Pufferspeicher (304) Speicherelemente einzeln für jeden Kanal umfasst und
dass wenigstens ein Speicherelement mit dem genannten Mapping-Pufferspeicher-Lesecontroller (306) assoziiert ist und
dass wenigstens ein Speicherelement mit dem genannten Phasendetektor (305) assoziiert ist und
dass wenigstens ein Speicherelement mit dem genannten Byte-Multiplexer (307) assoziiert ist.

4. Telekommunikationsnetzelement nach Anspruch 3,
**dadurch gekennzeichnet, dass**
der Schreibcontroller (303) Mittel zum Erzeugen einer Schreibadresse zum Speichern von Daten in dem genannten Mapping-Pufferspeicher (304) umfasst.

5. Telekommunikationsnetzelement nach Anspruch 3,
**dadurch gekennzeichnet, dass**
der Schreibcontroller (303) Mittel zum Einleiten der Mapping-Pufferspeicherinitialisierung umfasst.

6. Telekommunikationsnetzelement nach Anspruch 3,
**dadurch gekennzeichnet, dass**
der Schreibcontroller (303) Mittel zum Setzen eines Alarmsignals umfasst.

7. Telekommunikationsnetzelement nach Anspruch 3,
**dadurch gekennzeichnet, dass**
der Schreibcontroller (303) Mittel zum Setzen eines Puffer-Überlauf- oder -Unterlauf-Interrupt umfasst.

8. Telekommunikationsnetzelement nach Anspruch 3,
**dadurch gekennzeichnet, dass**
der Schreibcontroller (303) Mittel zum Setzen von Statusbits in dem genannten Seriell-Parallel-Wandler umfasst.

9. Telekommunikationsnetzelement nach Anspruch 3 zum sychronen Mappen eines Signals, **dadurch gekennzeichnet, dass**
das genannte Speicherelement des genannten Mapping-Pufferspeichers (304) aus einer Mehrzahl von Bits besteht, wobei wenigstens ein Bit für eine Zeitschlitzmarkierung verwendet wird und eine Mehrzahl von Bits für Kanaldaten verwendet werden.

10. Telekommunikationsnetzelement nach Anspruch 3, **dadurch gekennzeichnet, dass**
der genannte Phasendetektor (305) Mittel zum Erhalten des Füllstands des wenigstens einen Byte-Pufferspeichers von dem genannten Seriell-Parallel-Wandler (302) und Mittel zum Erhalten der Schreibposition des genannten Mapping-Pufferspeichers (304) und
Mittel zum Erhalten der Leseposition des genannten Mapping-Pufferspeichers (304) und
Mittel zum Erhalten des Füllstands des genannten Speicherelements des genannten Byte-Multiplexers (307) umfasst.

11. Telekommunikationsnetzelement nach Anspruch 3 oder 9, **dadurch gekennzeichnet, dass**
der Schreibcontroller (303) Mittel für die Synchronisierung zwischen einer Funktionseinheit und einem Zeiger-Generator umfasst.

12. Telekommunikationsnetzelement nach Anspruch 3, **dadurch gekennzeichnet, dass**
der genannte Lesecontroller (306) Mittel zum Erzeugen eines Rahmenausrichtsignals und Mittel zum Erzeugen einer Leseadresse zum Lesen von Daten in dem genannten Mapping-Pufferspeicher (304) umfasst.

13. Telekommunikationsnetzelement nach Anspruch 3 für asynchrones Mappen eines Signals, **dadurch gekennzeichnet, dass**
der genannte Multiplexer wenigstens einen Byte-Pufferspeicher umfasst und
dass der genannte Phasendetektor Mittel zum Erhalten des Füllstands des genannten wenigstens einen Byte-Pufferspeichers von dem genannten Seriell-Parallel-Wandler und Mittel zum Erhalten der Schreibposition und Mittel zum Erhalten der Leseposition und Mittel zum Erhalten des Füllstands des genannten wenigstens einen Byte-Pufferspeichers von dem genannten Multiplexer umfasst.

14. Telekommunikationsnetzelement nach Anspruch 2, **dadurch gekennzeichnet, dass**
der erste Kommunikationskanal der Mehrzahl von Kommunikationskanälen ein Plesiochrone digitale Hierarchie (PDH) Kanal ist und der zweite Kommunikationskanal ein Synchrone digitale Hierarchie (SDH) Kanal ist.

15. Telekommunikationsnetzelement nach Anspruch 2, **dadurch gekennzeichnet, dass**
der erste Kommunikationskanal der Mehrzahl von Kommunikationskanälen ein Synchrone digitale Hierarchie (SDH) Kanal ist und der zweite Kommunikationskanal ein Plesiochrone digitale Hierarchie (PDH) Kanal ist.

16. Verfahren zum gemeinsamen Nutzen von Ressourcen auf einem einzelnen Chip in einem Telekommunikationsnetzelement durch Verwenden von wenigstens einer Kombinationseinheit
und wenigstens einer Speichereinheit und wenigstens einer Steuereinheit und wenigstens einer Multiplexeinheit,
**dadurch gekennzeichnet, dass**
die genannte Kombinationseinheit, die genannte Speichereinheit, die genannte Steuereinheit und die genannte Multiplexeinheit auf dem genannten Chip logisch voneinander getrennt sind, und
dass die genannte Mehrzahl von Kommunikationskanälen von der genannten Kombinationseinheit im Zeitmultiplexverfahren verarbeitet wird, wobei die genannte Kombinationseinheit für jeden Kanal separat eine gleiche Bool'sche Gleichung repräsentiert, und
dass das Ergebnis der Kombinationseinheit von der genannten Speichereinheit für jeden Kanal einzeln gespeichert wird, und
dass die gespeicherten Daten von der genannten Multiplexeinheit zu einem multiplexierten Ausgangssignal multiplexiert werden und
dass die genannte Steuereinheit das Zusammenarbeiten zwischen der genannten Kombinationseinheit, der genannten Speichereinheit und der genannten Multiplexeinheit steuert.

17. Verfahren nach Anspruch 16, **gekennzeichnet durch**
Mapping von Signalen von einer Mehrzahl von Kommunikationskanälen (201) von einem ersten Kommunikationsnetz auf ein zweites Kommunikationsnetz in dem genannten Netzelement.

18. Verfahren nach Anspruch 16, **gekennzeichnet durch**
Assoziieren von wenigstens einem Byte-Pufferspeicher mit einem Seriell-Parallel-Wandler und Assoziieren von wenigstens einem Speicherelement mit einem Mapping-Pufferspeicher-Schreibcontroller, wobei in Speicherelementen des Mapping-Pufferspeichers Kanal Daten für jeden Kanal einzeln gespeichert werden,
Assoziieren von wenigstens einem Speicherelement mit einem Mapping-Pufferspeicher-Lesecontroller und Assoziieren von wenigstens einem Speicherelement mit einem Phasendetektor und Assoziieren von wenigstens einem Speicherelement mit einem Byte-Multiplexer.

19. Verfahren nach Anspruch 18, **gekennzeichnet durch**
Erhalten eines Füllstands des wenigstens einen Byte-Pufferspeichers von dem genannten Seriell-Parallel-Wandler in dem genannten Phasendetektor, Erhalten der Schreibposition des genannten Mapping-Pufferspeichers in dem genannten Phasendetektor, Erhalten der Leseposition des genannten Mapping-Pufferspeichers und Erhalten des Füllstands des genannten Speicherelements des genannten Byte-Multiplexers in dem genannten Phasendetektor.

## Revendications

1. Elément de réseau de télécommunication comprenant des moyens de partage des ressources sur une puce unique par une pluralité de canaux de communication (201), ces moyens comprennent au moins une unité de multiplexage (202), au moins une unité combinatoire (204), au moins une unité de stockage (205), et au moins une unité de commande (206), et
**caractérisé en ce que**
ladite unité de multiplexage (202), ladite unité combinatoire (204), ladite unité de stockage (205), et ladite unité de commande (206) sont séparées logiquement les unes des autres sur ladite puce, et
ladite pluralité de canaux de communication (201) est multiplexée par ladite unité de multiplexage (202) en un signal de sortie multiplexé (203), et ledit signal de sortie multiplexé (203) est traité par ladite unité combinatoire (204) en multiplexage temporel, où ladite unité combinatoire (204) représente une même équation booléenne pour chaque canal séparément, et
le résultat de l'unité combinatoire est stocké par ladite unité de stockage (205) pour chaque canal individuellement, et
ladite unité de commande (206) commande l'interfonctionnement entre ladite unité de multiplexage (202), ladite unité combinatoire (204), et ladite unité de stockage (205).

2. Elément de réseau de télécommunication selon la revendication 1,
**caractérisé en ce que**
ledit élément de réseau prévoit un moyen de mappage des signaux d'une pluralité de canaux de communication (201) d'un premier réseau de communication vers un deuxième réseau de communication.

3. Elément de réseau de télécommunication selon la revendication 1 ou 2,
**caractérisé en ce que**
l'unité combinatoire (204) comprend
un convertisseur série-parallèle (302), et
une mémoire tampon de mappage (304), et
un contrôleur d'écriture (303) de ladite mémoire tampon de mappage, et
un contrôleur de lecture (306) de ladite mémoire tampon de mappage, et
un capteur de phase (305), et
un multiplexeur d'octet (307), et
au moins une mémoire tampon de byte est associé audit convertisseur série-parallèle (302), et
au moins un élément de stockage est associé audit contrôleur d'écriture (303) de ladite mémoire tampon de mappage, et
la mémoire tampon de mappage (304) comprend des éléments de stockage pour chaque canal individuellement, et
au moins un élément de stockage est associé audit contrôleur de lecture de ladite mémoire tampon de mappage (306), et
au moins un élément de stockage est associé audit capteur de phase (305), et
au moins un élément de stockage est associé audit multiplexeur d'octet (307).

4. Elément de réseau de télécommunication selon la revendication 3,
**caractérisé en ce que**
le contrôleur d'écriture (303) comprend un moyen destiné à générer une adresse d'écriture destinée à stocker des données dans ladite mémoire tampon de mappage (304) .

5. Elément de réseau de télécommunication selon la revendication 3,
**caractérisé en ce que**
le contrôleur d'écriture (303) comprend un moyen destiné à initier une initialisation de mémoire tampon de mappage.

6. Elément de réseau de télécommunication selon la revendication 3,
**caractérisé en ce que**
le contrôleur d'écriture (303) comprend un moyen destiné à régler un signal d'alerte.

7. Elément de réseau de télécommunication selon la revendication 3,
**caractérisé en ce que**
le contrôleur d'écriture (303) comprend un moyen destiné à régler une interruption de dépassement ou de soupassement de la mémoire tampon.

8. Elément de réseau de télécommunication selon la revendication 3,
**caractérisé en ce que**
le contrôleur d'écriture (303) comprend un moyen destiné à régler les bits d'état dans ledit convertisseur série-parallèle.

9. Elément de réseau de télécommunication selon la revendication 3 pour le mappage synchrone d'un signal,
**caractérisé en ce que**
ledit élément de stockage de ladite mémoire tampon de mappage (304) se compose d'une pluralité de bits, où au moins un bit est utilisé pour un marqueur d'intervalle de temps et une pluralité de bits est utilisée pour des données de canal.

10. Elément de réseau de télécommunication selon la revendication 3,
**caractérisé en ce que**
ledit capteur de phase (305) comprend un moyen destiné à recevoir le niveau de remplissage du au moins une mémoire tampon d'octet dudit convertisseur série-parallèle (302), et un moyen destiné à recevoir la position d'écriture de ladite mémoire tampon (304), et
un moyen destiné à recevoir la position de lecture de ladite mémoire tampon (304), et
un moyen destiné à recevoir le niveau de remplissage dudit élément de stockage dudit multiplexeur d'octet (307).

11. Elément de réseau de télécommunication selon la revendication 3 ou 9,
**caractérisé en ce que**
ledit contrôleur d'écriture (303) comprend un moyen de synchronisation entre l'unité fonctionnelle et un générateur de pointeur.

12. Elément de réseau de télécommunication selon la revendication 3,
**caractérisé en ce que**
ledit contrôleur de lecture (306) comprend un moyen destiné à fournir un signal d'alignement de trame, et un moyen destiné à générer une adresse de lecture destinée à lire des données dans ladite mémoire tampon de mappage (304).

13. Elément de réseau de télécommunication selon la revendication 3 pour le mappage synchrone d'un signal,
**caractérisé en ce que**
ledit multiplexeur comprend au moins une mémoire tampon d'octet, et
le capteur de phase comprend un moyen destiné à recevoir le niveau de remplissage de ladite au moins une mémoire tampon d'octet dudit convertisseur série-parallèle, et un moyen destiné à recevoir la position d'écriture, et un moyen destiné à recevoir la position de lecture, et un moyen destiné à recevoir le niveau de remplissage dudit au moins une mémoire tampon d'octet dudit multiplexeur.

14. Elément de réseau de télécommunication selon la revendication 2,
**caractérisé en ce que**
le premier canal de communication de la pluralité de canaux de communication est un canal à hiérarchie numérique plésiochrone (HNP) et le deuxième canal est un canal à hiérarchie numérique synchrone (HNS) .

15. Elément de réseau de télécommunication selon la revendication 2,
**caractérisé en ce que**
le premier canal de communication de la pluralité de canaux de communication est un canal à hiérarchie numérique synchrone (HNS) et le deuxième canal est un canal à hiérarchie numérique plésiochrone (HNP).

16. Procédé de partage des ressources sur une puce unique dans un élément de réseau de télécommunication en utilisant
au moins une unité combinatoire, et
au moins une unité de stockage, et
au moins une unité de commande, et
au moins une unité de multiplexage,
**caractérisé en ce que**
ladite unité combinatoire, ladite unité de stockage, ladite unité de commande, et ladite unité de multiplexage, sont logiquement séparées les unes des autres sur ladite puce, et ladite pluralité de canaux de communication est traitée par ladite unité combinatoire en multiplexage temporel, où ladite unité combinatoire représente une même équation booléenne pour chaque canal séparément, et
le résultat de l'unité combinatoire est stocké par ladite unité de stockage pour chaque canal individuellement, et les données stockées sont multiplexées par ladite unité de multiplexage en un signal de sortie multiplexé, et ladite unité de commande commande l'interfonctionnement entre ladite unité combinatoire, ladite unité de stockage, et ladite unité de multiplexage.

17. Procédé selon la revendication 16,
**caractérisé par**
le fait de mettre en correspondance des signaux provenant d'une pluralité de canaux de communication (201) d'un premier réseau de communication vers un second réseau de communication dans ledit élément de réseau.

18. Procédé selon la revendication 16,
**caractérisé par**
le fait d'associer au moins une mémoire-tampon d'octets à un convertisseur série-parallèle, et le fait d'associer au moins un élément de stockage à un contrôleur d'écriture de mémoire-tampon de mappage,
le fait de stocker individuellement, dans les éléments de stockage de la mémoire-tampon de mappage, des donneés canal pour chaque canal,
le fait d'associer au moins un élément de stockage à un contrôleur de lecture de mémoire-tampon de mappage, et le fait d'associer au moins un élément de stockage à un capteur de phase, et le fait d'associer au moins un élément de stockage à un multiplexeur d'octets.

19. Procédé selon la revendication 18,
**caractérisé par**
le fait de recevoir, dans ledit capteur de phase, un niveau de remplissage de la, au moins une, mémoire-tampon d'octets en provenance dudit convertisseur série-parallèle, le fait de recevoir, dans ledit capteur de phase, la position d'écriture de ladite mémoire-tampon de mappage, le fait de recevoir la position de lecture de ladite mémoire-tampon de mappage et le fait de recevoir, dans ledit capteur de phase, le niveau de remplissage dudit élément de stockage dudit multiplexeur d'octets.
